# EUROPEAN PATENT APPLICATION

(11) **EP 4 397 584 A1**
(43) Date of publication of application: **10.07.2024**
(21) Application number: 22864121.3
(22) Date of filing: 28.07.2022
(51) Int. Cl.: B62M 9/00, F16G 13/06

(54) **BICYCLE CHAIN AND CONNECTING PIN MEMBER FOR BICYCLE CHAIN**

(30) Priority: 03.09.2021 JP 2021143639
(71) Applicant: Bao Corporation, Izumi-shi, Osaka 594-1156 (JP)
(72) Inventor: NAGANO Masashi, Izumi-shi, Osaka 594-1156 (JP)
(74) Representative: Horn Kleimann Waitzhofer Schmid-Dreyer Patent- und Rechtsanwälte PartG mbB
(86) International application number: PCT/JP2022/029068
(87) International publication number: WO 2023/032533

(57) **Abstract**

Provided is a bicycle chain that enables easy maintenance. A bicycle chain 10 includes outer link parts 12 having a pair of outer plate parts 12a disposed opposing and spaced at a predetermined interval, inner link parts 14 having a pair of inner plate parts 14a provided inward of the pair of outer plate parts and disposed partially overlapping the pair of outer plate parts, connection pin parts 18 that penetrate through-hole sections 13 formed in a portion where the outer plate parts 12a and the inner plate parts 14a overlap for connecting the outer plate parts 12a and the inner plate parts 14a, and roller parts 16 disposed inward of the pair of inner plate parts 14a and rotatably axially about the connection pin parts 18. The connection pin parts 18 have a first pin part 20 including a recess 24 formed with a spiral thread, and a second pin part 22 including a protuberance 28 to screw into the recess in the first pin part 20.

## Description

### TECHNICAL FIELD

The present invention relates to bicycle chains and connection pin members for bicycle chains.

### BACKGROUND ART

A bicycle chain meshes with a front sprocket on a bicycle gear crank and a rear sprocket on a rear wheel hub, and transmits pedal force to the rear wheel hub via a gear crank.

The chain includes outer link parts having a pair of outer plate parts, inner link parts having a pair of inner plate parts disposed spaced apart from each other so as to partially overlap the inner sides of the outer plate parts, connection pin parts connecting the both links, and roller parts disposed on the outer peripheral side of the connection pin parts. The connection pin parts have a midsection and bulging sections formed by crimping on either end of the midsection and interlocking with the outer surface of the outer plate parts.

As technology related to the present invention, for example, Patent Document 1 describes a bicycle chain that is constituted by alternately arraying a number of inner plates and outer plates so that their ends overlap, pivotally connecting the ends of the inner plates to the ends of the outer plates with chain pins, and fitting short tubular rollers to the outer peripheries of the chain pins, and that is characterized in that the axial-end sections of the inner peripheral surfaces of the rollers have a tapered face the diameter of which increases toward the opening-end face.

### RELATED ART DOCUMENTS

### PATENT DOCUMENTS

Patent Document 1: JP3135968U

### SUMMARY OF THE INVENTION

### PROBLEM TO BE SOLVED BY THE INVENTION

As described above, with conventional bicycle chains, outer plate parts are connected to inner plate parts by means of connection pin parts, and as described above, the end sections of the connection pin parts are each crimped. Therefore, disconnecting an inner plate part from an outer plate part for chain maintenance, for example, requires a special tool to be used, and only highly skilled workers can carry out the work.

The objective of the present invention is to provide a bicycle chain and a connection member for a bicycle chain that enable easy maintenance.

### MEANS FOR SOLVING THE PROBLEMS

A bicycle chain involving the present invention includes an outer link part having a pair of outer plate parts disposed opposing and spaced at a predetermined interval, an inner link part having a pair of inner plate parts provided inward of the pair of outer plate parts and disposed partially overlapping the pair of outer plate parts, a connection pin part that penetrates a through-hole section formed in a portion where the outer plate parts and the inner plate parts overlap for connecting the outer plate parts and the inner plate parts, and a roller part disposed inward of the pair of inner plate parts and rotatably axially about the connection pin part, the connection pin part having a first pin part including a recess formed with a spiral thread, and a second pin part including a protuberance to screw into the recess in the first pin part.

Also with the bicycle chain involving the present invention, it is preferable that the second pin part be provided with a head section having a tool hole for rotating the protuberance to screw the protuberance into the recess, that the head section have a substantially columnar shape, and that the recess have an aperture along the outer shape of the head section.

Also with the bicycle chain involving the present invention, it is preferable that the second pin part be provided with a head section having a tool hole for rotating the protuberance to screw the protuberance into the recess, that the head section have a substantially conical-trapezoidal shape tapered toward the protuberance, and that the recess have an aperture along the outer shape of the head section.

Also with the bicycle chain involving the present invention, it is preferable that the first pin part and the second pin part be knurled at least in a portion that is contactable to the outer link part.

Also with the bicycle chain involving the present invention, it is preferable that a microcapsule part that encapsulates a liquid or solid adhesive base agent or curing agent for securing the first pin part and the second pin part in a connected state be provided.

A connection pin member of a bicycle chain involving the present invention including an outer link part having a pair of outer plate parts disposed opposing and spaced at a predetermined interval, an inner link part having a pair of inner plate parts provided inward of the pair of outer plate parts and disposed partially overlapping the pair of outer plate parts is a connection pin member of a bicycle chain including a connection pin part that penetrates a through-hole section formed in a portion where the outer plate parts and the inner plate parts overlap for connecting the outer plate parts and the inner plate parts, the connection pin part having a first pin part including a recess formed with a spiral thread, and a second pin part including a protuberance to screw into the recess in the first pin part.

Also with the connection pin member of the bicycle chain involving the present invention, the second pin part is provided with a head section having a tool hole for rotating the protuberance to screw the protuberance into the recess, the head section has a substantially columnar shape, and the recess has an aperture along the outer shape of the head section.

Also with the connection pin member of the bicycle chain involving the present invention, it is preferable that the second pin part be provided with a head section having a tool hole for rotating the protuberance to screw the protuberance into the recess, that the head section have a substantially conical-trapezoidal shape tapered toward the protuberance, and that the recess have an aperture along the outer shape of the head section.

Also with the connection pin member of the bicycle chain involving the present invention, it is preferable that the first pin part and the second pin part be knurled at least in a portion that is contactable to the outer link part.

Also with the connection pin member of the bicycle chain involving the present invention, it is preferable that a microcapsule part that encapsulates a liquid or solid adhesive base agent or curing agent for securing the first pin part and the second pin part in a connected state be provided.

### EFFECTS OF THE INVENTION

According to the present invention, the connection pin part can be removed by attaching a screwdriver to a tool hole in the connection pin part and rotating it. This facilitates maintenance.

### BRIEF DESCRIPTION OF DRAWINGS

Fig. 1 is a diagram illustrating a bicycle chain involving an embodiment according to the present invention.
Fig. 2 is a diagram illustrating a bicycle chain that is a modification example of the bicycle chain involving the embodiment according to the present invention.
Fig. 3 is a diagram illustrating a bicycle chain that is a modification example of the bicycle chain involving the embodiment according to the present invention.

### DESCRIPTION OF EMBODIMENT

Hereinafter, a mode of embodying the present invention is explained in detail with reference to the accompanying drawings. In the following, like elements are assigned the same reference numerals in all the figures in the drawings, and a repeated description is omitted. In addition, in the description in the text, the reference numerals mentioned previously are used if necessary.

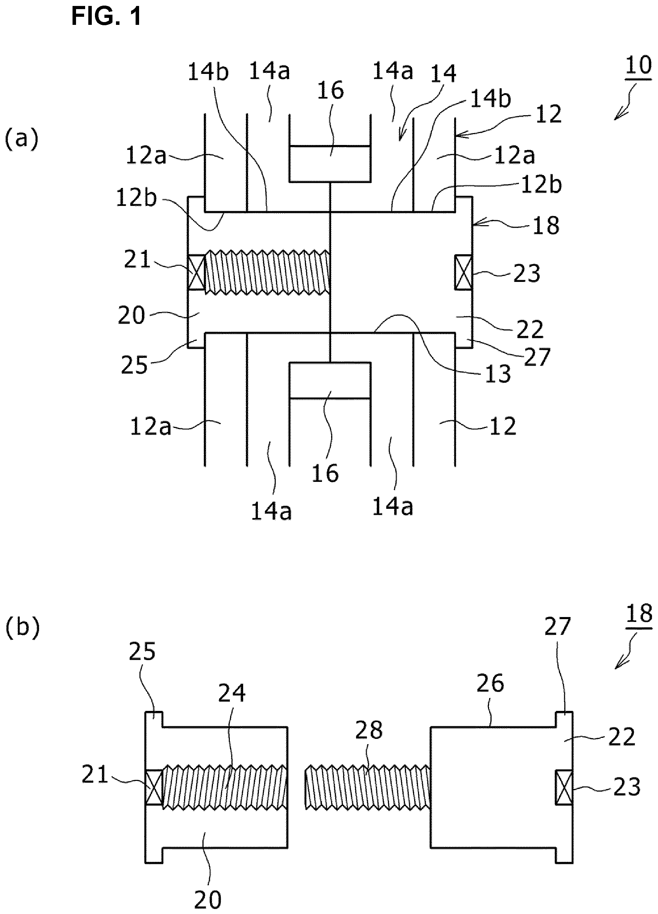

Fig. 1 is a diagram illustrating a bicycle chain 10 involving an embodiment according to the present invention.

A bicycle has a bicycle frame, front and rear wheels rotatably mounted on the bicycle frame, and a drive unit for driving the rear wheel with legs. Here, the drive unit is described as having multi-stage gears, but of course, it is also applicable to bicycles without multi-stage gears.

The drive unit has a gear crank part having a front sprocket rotatably mounted on the lower middle section of the bicycle frame, a multi-stage gear having a rear sprocket mounted on the rear wheel, a bicycle chain 10 wound around either of the front sprocket of the gear crank part or the rear sprocket of the multi-stage gear, and front and rear derailleurs for winding the bicycle chain 10 around either of the sprockets.

On the gear crank part, pedals are rotatably mounted, and the bicycle is driven by pedaling.

The bicycle chain 10 includes outer link parts 12, inner link parts 14 disposed alternately with the outer link parts 12, connection pin parts 18 that connect the outer link parts 12 and the inner link parts 14, and roller parts 16 that are disposed on the inner side of the inner link parts 14 and are rotatable about the axis of the connection pin parts 18.

The outer link parts 12 have a pair of outer plate parts 12a disposed spaced apart from and opposing each other, and first through-hole sections 12b formed in the pair of outer plate parts 12a. The inner diameter of the first through-hole sections 12b is larger than the diameter of the connection pin parts 18. This allows the connection pin parts 18 to easily penetrate the first through-hole sections 12b.

The outer plate parts 12a are tabular members made of a steel plate having a predetermined thickness and formed into a gourd shape with circular ends by a punching process.

The inner link parts 14 have a pair of inner plate parts 14a disposed spaced apart from each other so as to partially overlap the inner side of the pair of outer plate parts 12a, and at either end of the pair of inner plate parts 14a, have second through-hole sections 14b of approximately the same diameter as the first through-hole sections 12b.

The inner plate parts 14a are of a shape similar to the outer plate parts 12a and are tabular members made of a steel plate formed into a gourd shape with circular ends by a punching process. The inner diameter of the second through-hole sections 14b is larger than the diameter of the connection pin parts 18. This allows the connection pin parts 18 to easily penetrate the second through-hole sections 14b.

The connection pin parts 18 penetrate through-hole sections 13 that are formed in a portion where an outer plate part 12a and an inner plate part 14a overlap for connecting the outer plate part 12a and the inner plate part 14a, and that consist of the first through-hole sections 12b and the second through-hole sections 14b.

The connection pin parts 18 are rod-shaped members made of special steel the surface of which is hardened to improve wear resistance. The connection pin parts 18 are of a diameter larger than the inner diameters of the first through-hole sections 12b and the second through-hole sections 14b, and penetrate the first through-hole sections 12b and the second through-hole sections 14b to connect the outer link parts 12 and the inner link parts 14.

The connection pin parts 18 have a first pin part 20 including a recess 24 in which a spiral thread is formed, and a second pin part 22 including a protuberance 28 that screws into the recess 24 in the first pin part 20.

As illustrated in Fig. 1(b), in the first pin part 20, in the central part of its columnar member, a recess 24 having a thread into which the protuberance 28 of the second pin part screws is formed. The first pin part 20 is also formed with a tool hole 21 for rotating the recess 24 to screw the recess 24 and the protuberance 28 together. At the end of this columnar member, an interlock section 25 for interlocking with the outer plate parts 12a is formed. The recess 24 has a columnar aperture that follows the outer shape of a head section 26.

The second pin part 22 includes a head section 26 that has a tool hole 23 for rotating the protuberance 28 to screw the protuberance 28 into the recess 24, and the head section 26 has a substantially columnar shape having the same diameter as the first pin part 20, and at its end, is formed with an interlock section 27 for interlocking with an outer plate part 12a. It will be appreciated that the tool holes 21 and 23 have a shape that can be joined to a hexagonal Allen key or the like.

The roller parts 16 are disposed on the outer peripheral side of a cylindrical section between the pair of inner plate parts 14a and is rotatable about the axis of the connection pin parts 18. The roller parts 16 are rotatably supported on the outer peripheral surface of the cylindrical section of the cylindrical portion.

The action of the bicycle chain 10 with the above configuration will now be described. In conventional bicycle chains, outer plate parts and inner plate parts are connected by connection pin parts. Here, the end sections of the conventional connection pin parts are each crimped.

Therefore, there has been an issue that disconnecting, for example, an inner plate part from an outer plate part for maintenance or the like of a conventional bicycle chain requires a specialized tool to be used, and only highly skilled workers can carry out the work. In contrast, the bicycle chain 10 involving the embodiment according to the present invention demonstrates a remarkable effectiveness in such a situation.

First, a description is given of an instance in which as illustrated in Fig. 1, a connection pin part 18 is removed from the state in which the connection pin part 18 has been inserted in a through-hole section 13 that is formed in a portion where an outer plate part 12a overlaps an inner plate part 14a, and that consists of a first through-hole section 12b and a second through-hole section 14b.

Two hexagonal Allen keys are joined to a tool hole 21 in a first pin part 20 and a tool hole 23 in a second pin part 22. Then, the hexagonal Allen keys are rotated so as to unscrew a recess 24 and a protuberance 28.

Thereby as illustrated in Fig. 1(b), connection between the first pin part 20 and the second pin part 22 is released, and accordingly the outer plate part 12a and the inner plate part 14a can be disconnected.

Contrary to the above, in an instance in which the connection pin part 18 is connected, into the through-hole section 13 that is formed in a portion where the outer plate part 12a overlaps the inner plate part 14a, the first pin part 20 and the second pin part 22 are inserted.

Then, two hexagonal Allen keys are joined to the tool hole 21 in the first pin part 20 and the tool hole 23 in the second pin part 22, and the hexagonal Allen keys are rotated so as to screw the recess 24 and the protuberance 28 together. Thereby the outer plate part 12a and the inner plate part 14a are connected.

As described above, with the bicycle chain 10, by using two hexagonal Allen keys, the first pin part 20 and the second pin part 22 can be rotated so as to be connected or to eliminate connection, bringing an advantage that even a worker without high skill can easily perform maintenance of the bicycle chain 10.

Generally, bicycle chains have multiple standards, and for example, the length of pins for connecting outer links to inner links may vary. In contrast, with the bicycle chain 10, a state in which the first pin part 20 and the second pin part 22 are screwed together can be changed to make them one-size-fits-all, so as to freely change the length of the connection pins, which yields a remarkable effectiveness of being compatible with chains of various standards. It should be appreciated that the length of the connection pin differs between when only the tips of the first pin part 20 and the second pin part 22 are screwed together and when they are screwed together all the way to their roots.

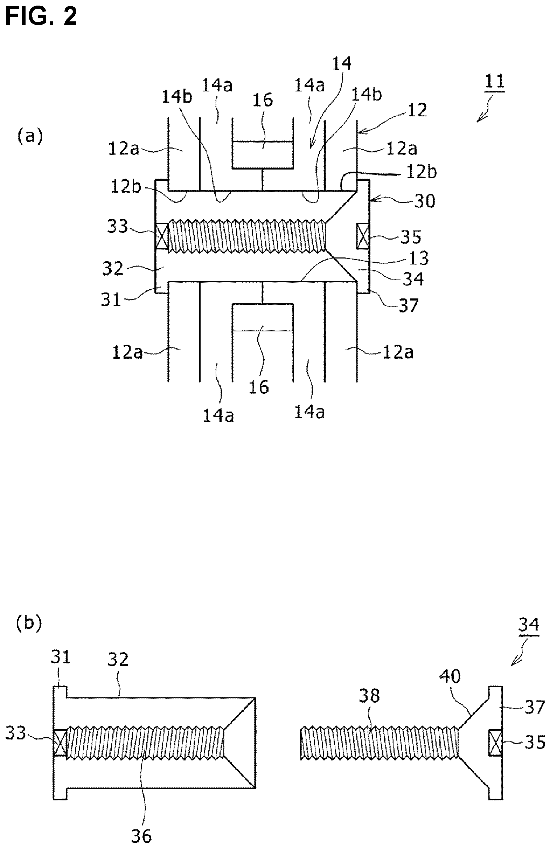

Next, a description is given of a bicycle chain 11, which is a modification example of the bicycle chain 10 involving the embodiment according to the present invention. Fig. 2 is a diagram illustrating a bicycle chain 11 involving an embodiment according to the present invention.

The bicycle chain 10 and the bicycle chain 11 differ only in the connection pin part 30, and are otherwise of identical configuration, and therefore the description will be centered on the configuration of the connection pin parts 30.

The connection pin parts 30 penetrate through-hole sections 13 that are formed in a portion where an outer plate part 12a and an inner plate part 14a overlap for connecting the outer plate part 12a and the inner plate part 14a, and that consist of the first through-hole sections 12b and the second through-hole sections 14b.

The connection pin parts 30 are rod-shaped members made of special steel the surface of which is hardened to improve wear resistance. The connection pin parts 30 are of a diameter larger than the inner diameters of the first through-hole sections 12b and the second through-hole sections 14b, and penetrate the first through-hole sections 12b and the second through-hole sections 14b to connect the outer link parts 12 and the inner link parts 14.

The connection pin parts 30 have a first pin part 32 including a recess 36 in which a spiral thread is formed, and a second pin part 34 including a protuberance 38 that screws into the recess 36 in the first pin part 32.

As illustrated in Fig. 2(b), the first pin part 32 has, in the central part of its columnar member, a recess 36 having a thread into which the protuberance 38 of the second pin part 34 screw. The first pin part 32 is also formed with a tool hole 33 for rotating the recess 36 to screw the recess 36 and the protuberance 38 together. At the end of this columnar member, an interlock section 31 for interlocking with the outer plate parts 12a is formed. The recess 36 has a substantially conical-trapezoidal aperture that follows the outer shape of a head section 40.

The second pin part 34 includes a head section 40 that has a tool hole 35 for rotating the protuberance 38 to screw the protuberance 38 into the recess 36, and the head section 40 has a substantially conical-trapezoidal shape tapered toward the protuberance 38, and at its end, is formed with an interlock section 37 for interlocking with an outer plate part 12a. It will be appreciated that the tool holes 33 and 35 have a shape that can be joined to a hexagonal Allen key or the like.

The action of the bicycle chain 11 with the above configuration will now be described. First, a description is given of an instance in which as illustrated in Fig. 2, a connection pin part 30 is removed from the state in which the connection pin part 30 has been inserted in a through-hole section 13 that is formed in a portion where an outer plate part 12a overlaps an inner plate part 14a, and that consists of a first through-hole section 12b and a second through-hole section 14b.

Two hexagonal Allen keys are joined to a tool hole 33 in a first pin part 32 and a tool hole 35 in a second pin part 34. Then, the hexagonal Allen keys are rotated so as to unscrew a recess 36 and a protuberance 38.

Thereby as illustrated in Fig. 2(b), connection between the first pin part 32 and the second pin part 34 is released, and accordingly the outer plate part 12a and the inner plate part 14a can be disconnected.

Contrary to the above, in an instance in which the connection pin part 30 is connected, into the through-hole section 13 that is formed in a portion where the outer plate part 12a overlaps the inner plate part 14a, the first pin part 32 and the second pin part 34 are inserted.

Then, two hexagonal Allen keys are joined to the tool hole 33 in the first pin part 32 and the tool hole 35 in the second pin part 34, and the hexagonal Allen keys are rotated so as to screw the recess 36 and the protuberance 38 together. Thereby the outer plate part 12a and the inner plate part 14a are connected.

As described above, with the bicycle chain 11, by using two hexagonal Allen keys, the first pin part 32 and the second pin part 34 can be rotated so as to be connected or eliminate connection, bringing an advantage of allowing easy maintenance of the bicycle chain 11. The connection pin part 30, having an substantially conical-trapezoidal shape with a tapered head section 40, has the advantage that it is unlikely to fall off because of the high frictional force against the recess 36.

With the above-described bicycle chains 10 and 11, by using the connection pin parts 18 and 30, the outer plate parts 12a and the inner plate parts 14a can be easily connected or disconnected. Therefore, also with conventional bicycle chains, the connection pin parts 18 and 30 can be employed to achieve the same effect.

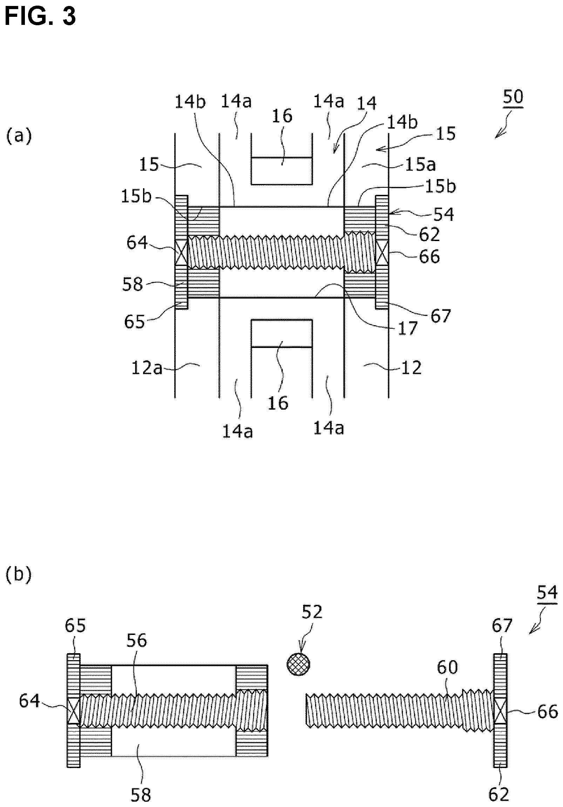

Next, a description is given of a bicycle chain 50, which is another modification example of the bicycle chain 10 involving the embodiment according to the present invention. Fig. 3 is a diagram illustrating a bicycle chain 50 involving an embodiment according to the present invention.

The bicycle chain 10 and the bicycle chain 50 differ only in the outer link part 15 and the connection pin part 54, and are otherwise of identical configuration, and therefore the description will be centered on the configurations of the outer link part 15 and the connection pin part 54.

The outer link part 15 has a pair of outer plate parts 15a disposed spaced apart from and opposing each other, and first through-hole sections 15b formed in the pair of outer plate parts 15a. The inner diameter of the first through-hole sections 15b is larger than the diameter of the connection pin part 54. This allows the connection pin part 54 to easily penetrate the first through-hole sections 15b.

The outer plate parts 15a are tabular members made of a steel plate having a predetermined thickness and formed into a gourd shape with circular ends by a punching process. Unlike the outer plate part 12a, the outer plate part 15a is formed with a recess, which is stair-stepped in the diagram illustrated in Fig. 3(a), for interlocking with an interlock section 67 of the connection pin part 54.

The connection pin part 54 penetrates a through-hole section 17 that is formed in a portion where an outer plate part 15a and an inner plate part 14a overlap for connecting the outer plate part 15a and the inner plate part 14a, and that consists of the first through-hole sections 15b and the second through-hole sections 14b.

The connection pin part 54 is a rod-shaped member made of special steel the surface of which is hardened to improve wear resistance. The connection pin part 54 is of a diameter larger than the inner diameters of the first through-hole sections 15b and the second through-hole sections 14b, and penetrates the first through-hole sections 15b and the second through-hole sections 14b to connect the outer link part 15 and the inner link part 14.

The connection pin part 54 has a first pin part 58 including a recess 56 in which a spiral thread is formed, and a second pin part 62 including a protuberance 60 that screws into the recess 56 in the first pin part 58. As illustrated in Fig. 3, the protuberance 60 is rendered stepwise so as to be slightly larger in diameter at the portion closer to the tool hole 66 than at the tip side.

As illustrated in Fig. 3(b), the first pin part 58 has, in the central part of its columnar member, a recess 56 having a thread into which the protuberance 60 of the second pin part 62 screw. The first pin part 58 is also formed with a tool hole 64 for rotating the recess 56 to screw the recess 56 and the protuberance 60 together. At the end of this columnar member, an interlock section 65 for interlocking with the outer plate parts 15a is formed. The recess 56 is larger in diameter at the tip side, which is located on the side opposite from the tool hole 64, than at the root side (tool hole 64 side), so as to follow the shape of the protuberance 60. Providing a step of this sort brings the advantage of increasing the strength in tightening.

The second pin part 62 is also formed with a tool hole 66 for rotating the protuberance 60 to screw the protuberance 60 and the recess 56 together. At this end, an interlock section 67 for interlocking with the outer plate parts 15a is formed. It will be appreciated that the tool holes 64 and 66 have a shape that can be joined to a hexagonal Allen key or the like.

The first pin part 58 and the second pin part 62 as illustrated in Fig. 3 are knurled at sections that are contactable with the outer plate part 15a of the outer link part 15. Knurling is a process of making fine unevenness or incisions in metal or resin.

Knurling is mainly divided into two types: diamond pattern and straight pattern. There are various shapes depending on pitch, groove depth, line angle, etc., such as square or diagonal. Here, the tips of the uneven portions are processed to be sharp, so that the knurled sections stick when they contact the outer plate part 15a.

When a bicycle is pedaled, it is preferable that in order that when the connection pin part 54 comes into contact with the outer link part 15 and the knurling sections stick as described above as the connection pin part 54 presses against the outer link part 15, the hardness of the connection pin part 54 should be higher than the hardness of the outer plate parts 15a of the outer link part 15. The greater the force of the above-described pressing, the greater the amount that the knurled sections of the connection pin part 54 bite into the outer link part 15.

The bicycle chain 50 includes a microcapsule part 52. The microcapsule part 52 is an adhesive agent that encapsulates a liquid or solid adhesive base agent or curing agent for securing the first pin part 58 and the second pin part 62 in a connected state.

The microcapsule part 52 employs a literally minute container having a polymer or film-forming material as a wall membrane coating a liquid or solid core substance, and being of, although not defined in size, generally from 5 pm to 300 pm.

The microcapsule part 52 is pre-controlled so that the wall membrane can be broken by any desired means, such as pressure, heat, light, acid, or chemicals, to extract the core substance. The core substance can also be gradually released, without breaking the wall membrane, through the micropores in the wall membrane. Here, the core substance is controlled so as to be extracted by means of the pressure generated when the first pin 58 and the second pin 62 are screwed together.

The action of the bicycle chain 50 with the above configuration will now be described. In an instance in which the connection pin part 54 is connected, into the through-hole section 17 that is formed in a portion where the outer plate parts 15a overlap the inner plate parts 14a, the first pin part 58 and the second pin part 62 are inserted. At this time, the microcapsule part 52 is inserted between the first pin part 58 and the second pin part 62.

Then, two hexagonal Allen keys are joined to the tool hole 64 in the first pin part 58 and the tool hole 66 in the second pin part 62, and the hexagonal Allen keys are rotated so as to screw the recess 56 and the protuberance 60 together. Thereby the outer plate parts 15a and the inner plate parts 14a are connected.

As described above, with the bicycle chain 50, by using two hexagonal Allen keys, the first pin part 58 and the second pin part 62 can be rotated so as to be connected or to eliminate connection, bringing an advantage of allowing easy maintenance of the bicycle chain 50.

The force applied when the first pin part 58 and the second pin part 62 are connected causes the core substance in the microcapsule part 52 to be extracted and adhere to the first pin part 58 and the second pin part 62, and it hardens, thereby securing the first pin part 58 and the second pin part 62 in a connected state.

With the bicycle chain 50, when a user pedals a bicycle to travel, the knurling sections on the connection pin part 54 are in a form such that they stick when they contact the outer plate parts 15a. This can prevent the connection pin part 52 from rotating. Since the connection pin part 52 is prone to wear when it rotates, limiting the rotation brings the advantage of extending the life of the bicycle chain 50.

### LIST OF REFERENCE NUMERALS

10, 11, 50: Bicycle chain, 12, 15: Outer link part, 12a, 15a: Outer plate part, 12b, 15b: First through-hole section, 13, 17: Through-hole section, 14: Inner link part, 14a: Inner plate part, 14b: Second through-hole section, 16: Roller part, 18, 54: Connection pin part, 20, 58: First pin part, 21, 23: Tool hole, 22, 62: Second pin part, 24, 56: Recess, 25: Interlock section, 26: Head section, 27, 67: Interlock section, 28, 60: Protuberance, 30: Connection pin parts, 31, 65: Interlock section, 32: First pin part, 34: Second pin part, 33, 35, 64, 66: Tool hole, 36: Recess, 37: Interlock section, 38: Protuberance, 40: Head section, 52: Microcapsule part

## Claims

1. A bicycle chain comprising:
an outer link part having a pair of outer plate parts disposed opposing and spaced at a predetermined interval;
an inner link part having a pair of inner plate parts provided inward of the pair of outer plate parts and disposed partially overlapping the pair of outer plate parts;
a connection pin part that penetrates a through-hole section formed in a portion where the outer plate parts and the inner plate parts overlap for connecting the outer plate parts and the inner plate parts; and
a roller part disposed inward of the pair of inner plate parts and rotatably axially about the connection pin part;
the connection pin part having
a first pin part including a recess formed with a spiral thread, and
a second pin part including a protuberance to screw into the recess in the first pin part.

2. The bicycle chain according to claim 1, wherein
the second pin part includes a head section having a tool hole for rotating the protuberance to screw the protuberance into the recess,
the head section has a substantially columnar shape, and
the recess has an aperture along an outer shape of the head section.

3. The bicycle chain according to claim 1, wherein
the second pin part includes a head section having a tool hole for rotating the protuberance to screw the protuberance into the recess,
the head section has a substantially conical-trapezoidal shape tapered toward the protuberance, and
the recess has an aperture along an outer shape of the head section.

4. The bicycle chain according to claim 1, wherein
the first pin part and the second pin part are knurled at least in a portion that is contactable to the outer link part.

5. The bicycle chain according to claim 1, further comprising:
a microcapsule part encapsulating a liquid or solid adhesive base agent or curing agent for securing the first pin part and the second pin part in a connected state.

6. A connection pin member of a bicycle chain including an outer link part having a pair of outer plate parts disposed opposing and spaced at a predetermined interval, and an inner link part having a pair of inner plate parts provided inward of the pair of outer plate parts and disposed partially overlapping the pair of outer plate parts, the connection pin member comprising:
a connection pin part that penetrates a through-hole section formed in a portion where the outer plate parts and the inner plate parts overlap for connecting the outer plate parts and the inner plate parts,
the connection pin part having
a first pin part including a recess formed with a spiral thread, and
a second pin part including a protuberance to screw into the recess in the first pin part.

7. The connection pin member of a bicycle chain according to claim 6, wherein
the second pin part includes a head section having a tool hole for rotating the protuberance to screw the protuberance into the recess,
the head section has a substantially columnar shape, and
the recess has an aperture along an outer shape of the head section.

8. The connection pin member of a bicycle chain according to claim 6, wherein
the second pin part includes a head section having a tool hole for rotating the protuberance to screw the protuberance into the recess,
the head section has a substantially conical-trapezoidal shape tapered toward the protuberance, and
the recess has an aperture along an outer shape of the head section.

9. The connection pin member of a bicycle chain according to claim 6, wherein
the first pin part and the second pin part are knurled at least in a portion that is contactable to the outer link part.

10. The connection pin member of a bicycle chain according to claim 6, further comprising:
a microcapsule part encapsulating a liquid or solid adhesive base agent or curing agent for securing the first pin part and the second pin part in a connected state.
